# EUROPEAN PATENT SPECIFICATION

(11) **EP 3 995 251 B1**
(45) Date of publication and mention of the grant of the patent: **17.01.2024**
(21) Application number: 20020515.1
(22) Date of filing: 10.11.2020
(51) Int. Cl.: B23K 35/00, B23K 35/36, B23K 35/362, B23K 35/368, B23K 35/365

(54) **METHOD FOR DEPOSITING AN OVERLAY MATERIAL ONTO A METAL SURFACE BY MEANS OF ELECTROSLAG STRIP CLADDING**
VERFAHREN ZUM AUFBRINGEN EINES AUFTRAGSMATERIALS AUF EINE METALLOBERFLÄCHE MITTELS ELEKTROSCHLACKE-BANDPLATTIEREN
PROCÉDÉ DE DÉPÔT D'UN MATÉRIAU DE RECOUVREMENT SUR UNE SURFACE MÉTALLIQUE AU MOYEN DE PLACAGE DE FEUILLARD SOUS LAITIER ÉLECTROCONDUCTEUR

(43) Date of publication of application: 11.05.2022
(73) Proprietor: Voestalpine Böhler Welding Belgium s.a., 7180 Seneffe (BE)
(72) Inventor: Decherf, Mathieu, 7804 Rebaix (BE)
(74) Representative: Keschmann, Marc

(56) References cited:
- EP-A1- 3 360 641
- EP-A2- 3 027 351
- WO-A1-2015/082973
- AU-A4- 2020 101 820
- JP-A- H11 291 086
- JP-A- 2019 115 927
- TW-A- 201 318 757
- US-A- 4 764 224
- OH Y K ET AL: "ELECTROSLAG STRIP CLADDING OF STAINLESS STEEL WITH METAL POWDER ADDITIONS", WELDING JOURNAL, AMERICAN WELDING SOCIETY, MIAMI, FL, US, vol. 71, no. 1, 1 January 1992 (1992-01-01), pages 37-44, XP000246888, ISSN: 0043-2296

## Description

The invention refers to a method for depositing an overlay material onto a metal surface by means of electroslag strip cladding.

In nuclear power applications as well as in oil and gas upstream and downstream industry, weld overlays are deposited on the walls of vessels and vessel components in order to protect the walls from corrosion, high temperature and/or chemical embrittlement. The reactor vessel is the most important structural component for the safety of a nuclear power plant. The vessel of a nuclear reactor is a cylindrical component constructed using low alloy steels with a cladding of austenitic stainless steels to avoid corrosion processes. Corrosion often is the cause of fractures or deformation. Therefore, the advantage of austenitic stainless steel is its high corrosion resistance. Cladding materials are susceptible to hot cracking and stress corrosion cracking phenomena. Cracks in the cladding can generate catastrophic failure.

Overlay welding methods normally use strip electrodes, in order to produce a weld overlay on the metal surface. The two most common methods for surfacing large components are submerged arc strip cladding and electroslag strip cladding.

In electroslag strip cladding, a strip electrode is continuously fed into a shallow layer of electrically conductive flux. The heat required to melt the strip, the slag-forming flux and the surface layer of the base metal is generated by resistance heating generated by the welding current flowing through the molten conductive slag. The process produces sufficient heat to keep the process stable and to melt the strip into the liquid slag, so as to transfer the strip into molten metal deposited onto the base metal.

Electroslag strip cladding is characterized by a high deposition rate and a low dilution. The degree of dilution among others determines the amount of iron that dilutes from the base metal into the deposited cladding.

However, in nuclear power applications, only the less efficient submerged arc strip cladding method is presently used.

The contents of the patent publications WO 2015/082973 A1, JP H11 291086 A, JP 2019 115927 A as well as AU 2020 101 820 A4 form the technical background for the subject matter of the present invention.

The metallurgical composition of the welding strip electrode strongly determines the quality of the resulting cladding with regard to corrosion-, temperature- and chemical resistance. A common alloy used for welding strip electrodes in nuclear power applications are the so-called 308L and 309L alloys. The composition of the 308L alloy is defined in AWS SFA-5.9:EQ308L and is as follows:

| | |
|---|---|
| C | 0.014 wt.-% |
| Mn | 1.71 wt.-% |
| Si | 0.40 wt.-% |
| Cr | 20.4 wt.-% |
| Ni | 10.3 wt.-% |
| Mo | 0.02 wt.-% |
| S | 0.002 wt.-% |
| P | 0.012 wt.-% |
| Nb | - |
| Cu | 0,03 wt.-% |
| N | 0.048 wt.-% |

the balance being Fe.

The composition of the 309L alloy is defined in AWS SFA-5.9:EQ309L and is as follows:

| | |
|---|---|
| C | 0.013 wt.-% |
| Mn | 1.69 wt.-% |
| Si | 0.40 wt.-% |
| Cr | 23.7 wt.-% |
| Ni | 13.6 wt.-% |
| Mo | 0.10 wt% |
| S | 0.001 wt.-% |
| P | 0.016 wt.-% |
| Nb | 0.01 wt.-% |
| Cu | 0,03 wt.-% |
| N | 0.055 wt.-% |

the balance being Fe.

308L and 309L alloy strips are marketed in different variants and various trade marks, such as Soudotape 308L and Soudotape 309L, obtained from voestalpine Böhler Welding.

Electroslag strip cladding is an advantageous welding process offering an increased productivity when compared to submerged arc strip cladding. However, there is currently no suitable flux material available for depositing an 308L or 309L alloy by means of an electroslag strip cladding process, that fulfills the technical requirements of nuclear applications. In particular, current strip-flux combinations do not ensure an ultimate tensile strength of 520 MPa while keeping the ferrite content of the overlay material around 15 FN (FN = ferrite number). This requirement is currently only fulfilled with submerged arc strip cladding solutions.

Manufacturers of structural components for nuclear power plants are reluctant to switch from a welding consumable to another, because product qualification is a burdensome process and changing a product always involves some risks. This is particularly true for changing the welding process.

Therefore, it is an object of the instant invention to provide an improved method for depositing an overlay material onto a metal surface by electroslag strip cladding using a welding strip electrode made of an austenitic stainless steel, such as a 308L or a 309L alloy. In particular, it is an object of the invention to provide a method, wherein the overlay material has an ultimate tensile strength (UTS) of above 520 MPa and a ferrite content of below 17FN.

In order to solve at least some of the above objects, the invention generally provides a method for depositing an overlay material onto a metal surface by means of electroslag strip cladding according to claim 1. The method comprises using a welding strip electrode made of an austenitic stainless steel, such as a 308L or a 309L alloy, and a flux material having the following composition:
- Al₂O₃: 20-30 wt.-%
- CaF₂: 55-70 wt.-%
- Mo: 0.3-3 wt. - %
- Nb: 1.2-2.5 wt. - %
- Cr: 3-6 wt. - %
- Mn: 1-3.5 wt. - %
- Na₂SiO₃: 1-6 wt.-%
and optionally further constituents, in particular:
- MgO: < 1 wt.-%
- CaO.Al₂O₃: < 1 wt.-%
- Carbonates: < 1 wt.-%
as well as unavoidable impurities.

The invention provides a specific mixture of alloying elements for the flux material lying within the allowed range of the 308L AWS standards that ensures the required performance of the overlay material with regard to ultimate tensile strength and ferrite number. Al₂O₃ and CaF₂ are provided in the flux material as slag formers. Mo functions as ferrite promoter in order to improve pitting corrosion resistance. Nb improves the intergranular resistance and functions as an alloy strengthener. Cr functions as a ferrite promoter and improves the corrosion resistance. Mn reduces the hot crack sensitivity. Na₂SiO₃ functions as a binder.

Further, the electroslag strip cladding process allows for a particularly high deposition rate, in particular an approx. 20% increased deposition rate when compared to known submerged arc strip cladding processes.

According to a preferred embodiment, two layers of overlay material are deposited onto the metal surface, each by means of an electroslag strip cladding process. Such a double layer technique is characterized in that a first cladding layer is deposited on the metal surface and subsequently a second cladding layer is deposited onto the first layer in a separate electroslag strip cladding process. Applying two layers is beneficial in order to obtain a sufficient total thickness of the overlay material. In electroslag strip cladding processes the first cladding layer will have a relatively low ferrite number and the second layer will have a higher ferrite number. Therefore, applying a second layer that forms the outer surface of the overlay material is beneficial for keeping the ferrite number in a preferred range of 13-17 FN.

In any case, a preferred embodiment provides that the second layer of the overlay material deposit has a ferrite content of < 17 FN, preferably < 15 FN, (measured on its top surface). Preferably, the overlay material deposit has a ferrite content of 13-17 FN, in particular 13-15 FN.

Within the scope of the invention, the ferrite number is measured with the help of Fischer Ferrite-scope FMP 30 according to AWS A4.2

Preferably, the first layer and/or the second layer of the overlay material deposit has an ultimate tensile strength of > 520 MPa, measured as described in the example section of the application (depositing 8 layers of weld metal deposit onto the surface of a steel plate in order to built-up a block of metal, and machining a test specimen from said block). The ultimate tensile strength (UTS) is the maximum stress that a material can withstand while being stretched or pulled before breaking. The ultimate tensile strength (Rm) is measured according to AWS B.4 standard.

In a preferred embodiment of the invention, the flux material has the following composition:
- Al₂O₃: 22-25 wt.-%
- CaF₂: 58-68 wt.-%
- Mo: 0.5-2 wt. - %
- Nb: 1.5-2.3 wt. - %
- Cr: 3-5 wt. - %
- Mn: 1.2-3 wt. - %
- Na₂SiO₃: 2-6 wt.-%
and optionally further constituents, in particular:
- MgO: < 1 wt.-%
- CaO.Al₂O₃: < 1 wt.-%
- Carbonates: < 1 wt.-%
as well as unavoidable impurities.

In a particularly preferred embodiment of the invention, the flux material has the following composition:
- Al₂O₃: 23-24 wt. - %
- CaF₂: 60-65 wt.-%
- Mo: 0.8-1.5 wt. - %
- Nb: 1.8-2.2 wt. - %
- Cr: 3.4-4.5 wt. - %
- Mn: 1.2-2.5 wt. - %
- Na₂SiO₃: 4-6 wt.-%
and optionally further constituents, in particular:
- MgO: < 1 wt.-%
- CaO.Al₂O₃: < 1 wt.-%
- Carbonates: < 1 wt.-%
as well as unavoidable impurities.

Particularly, the flux material may have the following composition:
- Al₃O₃: 24 wt.-%
- CaF₂: 62 wt.-%
- Mo: 1 wt.-%
- Nb: 2 wt.-%
- Cr: 4 wt.-%
- Mn: 2 wt.-%
- Na₂SiO₃: 5 wt.-%
and optionally further constituents, in particular:
- MgO: < 1 wt.-%
- CaO.Al₂O₃: < 1 wt.-%
- Carbonates: < 1 wt.-%
as well as unavoidable impurities.

As mentioned above, the flux material of the invention was developed to be combined with a welding strip electrode made of an austenitic stainless steel. In particular, the welding strip electrode has the following composition:

| | |
|---|---|
| C | 0.012-0.015 wt.-% |
| Mn | 1.65-1.75 wt.-% |
| Si | 0.38-0.42 wt.-% |
| Cr | 20-25 wt.-% |
| Ni | 10-15 wt.-% |
| Mo | 0.01-0.15 wt.-% |

and optionally further constituents, in particular:

| | |
|---|---|
| S | 0.0005-0.003 wt.-% |
| P | 0.012-0.020 wt.-% |
| Nb | 0.01 wt.-% |
| Cu | 0,02-0.04 wt.-% |
| N | 0.045-0.60 |

as well as unavoidable impurities, the balance being iron.

Welding strip electrodes falling under said ranges are marketed by voestalpine Böhler Welding Belgium s.a. under the trademark SOUDOTAPE 308L and SOUDOTAPE 309L.

According to a preferred embodiment, a first layer of overlay material is deposited by using a 309L welding strip electrode and a second layer of overlay material is deposited onto the first layer by using a 308L welding strip electrode.

According to the invention, the electroslag strip cladding comprises:
- providing the welding strip electrode,
- providing the flux material,
- positioning the welding strip electrode at a distance above a welding area of the metal surface,
- applying a layer of flux material onto the metal surface in the welding area,
- applying a welding current to the welding strip electrode thereby melting the flux material, the strip electrode and the metal surface,
- continuously feeding the welding strip electrode into the layer of molten flux material while advancing the welding strip electrode over the metal surface to produce an overlay material deposit on the metal surface along the advancement path.

It is known that the welding parameters chosen for the electroslag strip cladding process, such as welding current, welding voltage, welding speed and stick-out have an influence on the penetration thickness (the thickness of the material layer of the base metal that is molten) and the deposit thickness. In a preferred embodiment of the invention, an optimization of the welding parameters is achieved in order to keep the right ratio between penetration and deposit thickness and also to give enough time to transfer the elements between the weld pool and the liquid slag. Accordingly, said electroslag strip cladding may comprise applying a welding current of 400-1800 A, preferably 1200-1300 A, and a welding voltage of 22-26 V, in particular 23-25 V.

The welding current may preferably be selected so as to be adapted to the width of the welding strip electrode. According to a preferred embodiment a welding strip electrode is used having a width of 10-90mm, preferably 60mm. In order to adjust the welding current to the strip width it is advantageously proceeded such that the ratio of welding current [A] to strip width [mm] of the electrode is selected to be 18-22, preferably 20.

Further, said electroslag strip cladding advantageously may comprise positioning the welding strip electrode at a distance above a welding area of the metal surface so that the stick out is 28-42 mm, preferably 29-40 mm.

Further, the welding speed is preferably selected to be 16-24 cm/min, preferably 18-22 cm/min.

It is known that the strip feeding nozzle plays an important role in the strip cladding process. The nozzle guides the welding strip electrode, ensures an even distribution of the welding current over the full width of the welding strip electrode and has to be able to withstand and to dissipate the heat sufficiently to avoid overheating during continuous operation.

According to a preferred embodiment of the invention, the strip feeding nozzle is mounted to be pivotable relative to the metal surface. Depending on the base material curvature it is advantageous to give an inclination to the welding strip electrode by using a pivoting nozzle. This allows to control the angle between the strip and the surface to be cladded. Accordingly, a preferred embodiment provides that said electroslag strip cladding comprises holding a strip feeding nozzle such that the welding strip electrode is arranged at a maximum inclination angle of ± 25° with respect to the perpendicular to the metal surface.

According to a further aspect, the invention refers to a flux material for use in a method for depositing an overlay material onto a metal surface by means of electroslag strip cladding, said flux material having the following composition:
- Al₂O₃: 20-30 wt.-%
- CaF₂: 55-70 wt.-%
- Mo: 0.3-3 wt. - %
- Nb: 1.2-2.5 wt. - %
- Cr: 3-6 wt. - %
- Mn: 1-3.5 wt. - %
- Na₂SiO₃: 1-6 wt.-%
and optionally further constituents, in particular:
- MgO: < 1 wt.-%
- CaO.Al₂O₃: < 1 wt.-%
- Carbonates: < 1 wt.-%
as well as unavoidable impurities.

According to a further aspect, the invention refers to a set for use in a method for depositing an overlay material onto a metal surface by means of electroslag strip cladding, comprising a flux material of the invention and a welding strip electrode, wherein the welding strip electrode is made of an austenitic stainless steel, such as a 308L or a 309L alloy.

The method of the present invention may provide an article, such as a plate, a vessel or a pipe, is provided, comprising a metal surface and at least two layers of overlay material deposited onto the metal surface by means of a welding process, wherein the second layer of the overlay material has a ferrite content of < 17 FN, preferably < 15 FN, (measured on its top surface).

Preferably, the overlay material has the following composition on its top surface:

| | |
|---|---|
| C | 0.022-0.025 wt.-% |
| Mn | 2.35-2.45 wt.-% |
| Si | 0.45-0.50 wt.-% |
| Cr | 18-21wt.-% |
| Ni | 9.5-11 wt.-% |
| Mo | 0.35-0.40 wt.-% |
| Nb | 0.4-0.5 wt.-% |

and optionally further constituents, in particular:

| | |
|---|---|
| S | < 0.0005 wt.-% |
| P | 0.014-0.018 wt.-% |
| Cu | 0,03-0.07 wt.-% |
| N | 0.045-0.55 wt.-% |

as well as unavoidable impurities, the balance being iron.

In the following, the invention will be explained in more detail by way of an exemplary embodiment.

A flat carbon steel plate (0,2 wt% C; thickness: 30 mm) was used as the base metal. The metal surface of this steel plate was covered with two superimposed layers of an overlay material by means of a welding process. An electroslag strip cladding process was used as said welding process. In the electroslag strip cladding process the consumables (welding strip electrode and flux material) are molten through resistance heating. The heating is provided by an electric current transmitted to the molten pool through an electrically conductive flux which, after melting, participates to the strip melting and generates a slag. In this process, the flux is introduced through a flux tube placed in front of the cladding nozzle and the strip is fed through a feeding roller.

Two welding strip electrodes as marketed by voestalpine Böhler Welding Belgium s.a. under the trademark SOUDOTAPE 309L and SOUDOTAPE 308L were used, which have the following composition:
SOUDOTAPE 309L:

| | |
|---|---|
| C | 0.013 wt.-% |
| Mn | 1.69 wt.-% |
| Si | 0.40 wt.-% |
| S | 0.001 wt.-% |
| P | 0.016 wt.-% |
| Cr | 23.7 wt.-% |
| Ni | 13.60 wt.-% |
| Mo | 0.10 wt.-% |
| Nb | 0.01 wt.-% |
| Cu | 0.03 wt% |
| N | 0.055 wt% |

the balance being Fe.
SOUDOTAPE 308L:

| | |
|---|---|
| C | 0.014 wt.-% |
| Mn | 1.71 wt.-% |
| Si | 0.40 wt.-% |
| S | 0.002 wt.-% |
| P | 0.012 wt.-% |
| Cr | 20.4 wt.-% |
| Ni | 10.3 wt.-% |
| Mo | 0.02 wt.-% |
| Nb | - |
| Cu | 0.03 wt% |
| N | 0.048 wt% |

the balance being Fe.

The strip electrode had a width of 60mm and a thickness of 0,5mm.

Further, a powdery flux material was used, that had the following composition:

| | |
|---|---|
| Al₂O₃ | 24 wt.-% |
| CaF₂ | 62 wt% |
| CaO.AL₂O₄ | 9,5 wt% |
| Cr | 4 wt% |
| Mo | 1 wt% |
| Nb | 2 wt% |
| Mn | 2 wt.-% |
| Na₂O.SiO₂ | 5 wt% |

The following welding parameters were used:
Welding current: 1250 A
Welding voltage: 24V
Welding speed: 20 cm/min
Stick-out: 30 mm

Three beads of overlay material arranged side-by side were deposited with SOUDOTAPE 309L and the flux material onto the surface of the steel plate in order to form the first layer. Two beads of overlay material arranged as well side-by side were deposited with SOUDOTAPE 308L and the flux material deposited onto the first layer in order to form the second layer.

The resulting strip cladding was subjected to a number of analyzing processes, such as side-bend tests (according to AWS B4.0), ultrasonic observations (according to ASME), ferrite content (with feritscope FMP30) and overlay chemistry measurements on the top surface (by atomic emission spectrometry) in order to check the quality of the deposit.

The results of the test were positive; the surface was continuous and without any defect. The chemical analysis and the ferrite content of the deposit obtained showed the following results, compared to the requirements defined by the AWS SFA-5.4:E308L standard:

| | C | Mn | Si | S | P | Cr | Ni | Mo | Nb | Cu | N | Fe | Ferrite WRC92 * | Ferrite FN ** |
|---|---|---|---|---|---|---|---|---|---|---|---|---|---|---|
| 1^{st} layer | 0.023 | 2.26 | 0.47 | <0.005 | 0.015 | 20.8 | 11.2 | 0.32 | 0.39 | 0.04 | 0.047 | Bal. | 11 | 8.2 |
| 2^{nd} layer | 0.024 | 2.40 | 0.48 | <0.005 | 0.016 | 20.7 | 10.0 | 0.38 | 0.45 | 0.05 | 0.051 | Bal. | 16 | 14.0 |
| AWS SFA-5.4:E308L | <=0,04 | 0,5-2,5 | <=1,00 | <=0,03 | <=0,04 | 18,0-21,0 | 9,0-11,0 | <=0,75 | - | <=0,75 | - | Bal. | - | - |

| | | | | | | | | | | | | | | |
|---|---|---|---|---|---|---|---|---|---|---|---|---|---|---|
| * Ferrite number calculated according to WRC92 diagram ** Ferrite number measured with feritscope Fischer | | | | | | | | | | | | | | |

Additionally, 8 layers of SOUDOTAPE 309L were deposited with the flux material onto the surface of the steel plate in order to built-up a block of metal. A 309L tensile test specimen was then machined from the metal block.

Likewise, 8 layers of SOUDOTAPE 308L were deposited with the flux material onto the surface of the steel plate in order to built-up a block of metal. A 308L tensile test specimen was then machined from the metal block.

The tensile tests were performed on the specimens according to AWS B4.0 standards and lead to the following results:

| | Rp0.2 [MPa] | Rm [MPa] | A (4d) [%] |
|---|---|---|---|
| Specimen 309L | 364 | 556 | 47 |
| Specimen 308L | 346 | 555 | 52 |

Thus, the content of all chemical elements in the second layer was within the limits laid down in AWS SFA 5.4:E308L. Additionally, the tensile strength of the 309L & 308L specimen are higher than 520MPa and the delta ferrite content of the 2^{nd} layer is below 17FN, which is a common requirement of the nuclear fabricators.

## Claims

1. A method for depositing an overlay material onto a metal surface by means of electroslag strip cladding, wherein said electroslag strip cladding comprises using a welding strip electrode made of an austenitic stainless steel and a flux material having the following composition:
- Al₂O₃: 20-30 wt.-%
- CaF₂: 55-70 wt.-%
- Mo: 0.3-3 wt. - %
- Nb: 1.2-2.5 wt. - %
- Cr: 3-6 wt. - %
- Mn: 1-3.5 wt. - %
- Na₂SiO₃: 1-6 wt.-%
and optionally further constituents, in particular:
- MgO: < 1 wt.-%
- CaO.Al₂O₃: < 1 wt.-%
- Carbonates: < 1 wt.-%
as well as unavoidable impurities, wherein electroslag strip cladding comprises:
- providing the welding strip electrode,
- providing the flux material,
- positioning the welding strip electrode at a distance above a welding area of the metal surface,
- applying a layer of flux material onto the metal surface in the welding area,
- applying a welding current to the welding strip electrode thereby melting the flux material, the strip electrode and the metal surface,
- continuously feeding the welding strip electrode into the layer of molten flux material while advancing the welding strip electrode over the metal surface to produce an overlay material deposit on the metal surface along the advancement path.

2. Method according to claim 1, wherein two layers of overlay material are deposited onto the metal surface.

3. Method according to claim 2, wherein the second layer of the overlay material deposit has a ferrite content of < 17 FN, preferably < 15 FN, (measured on its top surface), wherein the ferrite number (FN) is measured with the help of Fischer Ferrite-scope FMP 30 according to AWS A4.2.

4. Method according to any one of claims 1-3, wherein the flux material has the following composition:
- Al₂O₃: 22-25 wt.-%
- CaF₂: 58-68 wt.-%
- Mo: 0.5-2 wt. - %
- Nb: 1.5-2.3 wt. - %
- Cr: 3-5 wt. - %
- Mn: 1.2-3 wt. - %
- Na₂SiO₃: 2-6 wt.-%
and optionally further constituents, in particular:
- MgO: < 1 wt.-%
- CaO.Al₂O₃: < 1 wt.-%
- Carbonates: < 1 wt.-%
as well as unavoidable impurities.

5. Method according to any one of claims 1-4, wherein the flux material has the following composition:
- Al₂O₃: 23-24 wt. - %
- CaF₂: 60-65 wt.-%
- Mo: 0.8-1.5 wt. - %
- Nb: 1.8-2.2 wt. - %
- Cr: 3.4-4.5 wt. - %
- Mn: 1.2-2.5 wt. - %
- Na₂SiO₃: 4-6 wt.-%
and optionally further constituents, in particular:
- MgO: < 1 wt.-%
- CaO.Al₂O₃: < 1 wt.-%
- Carbonates: < 1 wt.-%
as well as unavoidable impurities.

6. Method according to any one of claims 1-5, wherein the flux material has the following composition:
- Al₂O₃: 24 wt.-%
- CaF₂: 62 wt.-%
- Mo: 1 wt. - %
- Nb: 2 wt. - %
- Cr: 4 wt.-%
- Mn: 2 wt. - %
- Na₂SiO₃: 5 wt.-%
and optionally further constituents, in particular:
- MgO: < 1 wt.-%
- CaO.Al₂O₃: < 1 wt.-%
- Carbonates: < 1 wt.-%
as well as unavoidable impurities.

7. Method according to any one of claims 1-6, wherein the welding strip electrode has the following composition:
| | |
|---|---|
| C | 0.012-0.015 wt.-% |
| Mn | 1.65-1.75 wt.-% |
| Si | 0.38-0.42 wt.-% |
| Cr | 20-25 wt.-% |
| Ni | 10-15 wt.-% |
| Mo | 0.01-0.15 wt.-% |
and optionally further constituents, in particular:
| | |
|---|---|
| S | 0.0005-0.003 wt.-% |
| P | 0.012-0.020 wt.-% |
| Nb | 0.01 wt.-% |
| Cu | 0,02-0.04 wt.-% |
| N | 0.045-0.60 |
as well as unavoidable impurities, the balance being iron.

8. Method according to any one of claims 1-7, wherein said electroslag strip cladding comprises applying a welding current of 400-1800 A, preferably 1200-1300 A, and a welding voltage of 22-26 V, in particular 23-25 V.

9. Method according to any one of claims 1-8, wherein a welding speed of 16-24 cm/min, preferably 18-22 cm/min, is used.

10. Flux material for use in a method for depositing an overlay material onto a metal surface by means of electroslag strip cladding, said flux material having the following composition:
- Al₂O₃: 20-30 wt.-%
- CaF₂: 55-70 wt.-%
- Mo: 0.3-3 wt. - %
- Nb: 1.2-2.5 wt. - %
- Cr: 3-6 wt. - %
- Mn: 1-3.5 wt. - %
- Na₂SiO₃: 1-6 wt.-%
and optionally further constituents, in particular:
- MgO: < 1 wt.-%
- CaO.Al₂O₃: < 1 wt.-%
- Carbonates: < 1 wt.-%
as well as unavoidable impurities.

11. Flux material according to claim 10, wherein the flux material has the following composition:
- Al₂O₃: 23-24 wt.-%
- CaF₂: 60-65 wt.-%
- Mo: 0.8-1.5 wt. - %
- Nb: 1.8-2.2 wt. - %
- Cr: 3.4-4.5 wt. - %
- Mn: 1.2-2.5 wt. - %
- Na₂SiO₃: 4-6 wt.-%
and optionally further constituents, in particular:
- MgO: < 1 wt.-%
- CaO.Al₂O₃: < 1 wt.-%
- Carbonates: < 1 wt.-%
as well as unavoidable impurities.

12. Flux material according to claims 10 or 11, wherein the flux material has the following composition:
- Al₂O₃: 24 wt.-%
- CaF₂: 62 wt.-%
- Mo: 1 wt. - %
- Nb: 2 wt. - %
- Cr: 4 wt.-%
- Mn: 2 wt. - %
- Na₂SiO₃: 5 wt.-%
and optionally further constituents, in particular:
- MgO: < 1 wt.-%
- CaO.Al₂O₃: < 1 wt.-%
- Carbonates: < 1 wt.-%
as well as unavoidable impurities.

13. Set for use in a method for depositing an overlay material onto a metal surface by means of electroslag strip cladding, comprising a flux material according to any one of claims 10-12 and a welding strip electrode, wherein the welding strip electrode is made of an austenitic stainless steel, such as a 308L or a 309L alloy.

14. Set according to claim 13, wherein the welding strip electrode has the following composition:
| | |
|---|---|
| C | 0.012-0.015 wt.-% |
| Mn | 1.65-1.75 wt.-% |
| Si | 0.38-0.42 wt.-% |
| Cr | 20-25 wt.-% |
| Ni | 10-15 wt.-% |
| Mo | 0.01-0.15 wt.-% |
and optionally further constituents, in particular:
| | |
|---|---|
| S | 0.0005-0.003 wt.-% |
| P | 0.012-0.020 wt.-% |
| Nb | 0.01 wt.-% |
| Cu | 0,02-0.04 wt.-% |
| N | 0.045-0.60 wt.-% |
as well as unavoidable impurities, the balance being iron.

## Patentansprüche

1. Verfahren zum Aufbringen eines Überzugsmaterials auf eine Metalloberfläche mittels Elektroschlacke-Bandplattieren, wobei das Elektroschlacke-Bandplattieren die Verwendung einer Schweißbandelektrode aus einem austenitischen rostfreien Stahl und einem Flussmittelmaterial mit der folgenden Zusammensetzung umfasst:
- Al₂O₃: 20-30 Gew.-%
- CaF₂: 55-70 Gew.-%
- Mo: 0,3-3 Gew.-%
- Nb: 1,2-2,5 Gew.-%
- Cr: 3-6 Gew.-%
- Mn: 1-3,5 Gew.-%
- Na₂SiO₃: 1-6 Gew.-%
und gegebenenfalls weitere Bestandteile, insbesondere:
- MgO: < 1 Gew.-%
- CaO.Al₂O₃: < 1 Gew.-%
- Karbonate: < 1 Gew.-%
sowie unvermeidbare Verunreinigungen, wobei das Elektroschlacke-Bandplattieren umfasst:
- Bereitstellen der Schweißbandelektrode,
- Bereitstellen des Flussmittelmaterials,
- Positionierung der Schweißbandelektrode in einem Abstand über einem Schweißbereich der Metalloberfläche,
- Auftragen einer Schicht aus Flussmittelmaterial auf die Metalloberfläche im Schweißbereich,
- Anlegen eines Schweißstroms an die Schweißbandelektrode, wodurch das Flussmittelmaterial, die Bandelektrode und die Metalloberfläche geschmolzen werden,
- kontinuierliches Einführen der Schweißbandelektrode in die Schicht aus geschmolzenem Flussmittelmaterial, während die Schweißbandelektrode über die Metalloberfläche vorgeschoben wird, um einen Überzugsmaterialauftrag auf der Metalloberfläche entlang des Vorschubwegs zu erzeugen.

2. Verfahren nach Anspruch 1, bei dem zwei Schichten von Überzugsmaterial auf die Metalloberfläche aufgebracht werden.

3. Verfahren nach Anspruch 2, wobei die zweite Schicht der Überzugsmaterialablagerung einen Ferritgehalt von < 17 FN, vorzugsweise < 15 FN, aufweist (gemessen an ihrer oberen Oberfläche), wobei die Ferritzahl (FN) mit Hilfe des Fischer-Ferrit-Scopes FMP 30 gemäß AWS A4.2 gemessen wird.

4. Verfahren nach einem der Ansprüche 1 bis 3, wobei das Flussmittelmaterial die folgende Zusammensetzung aufweist:
- Al₂O₃: 22-25 Gew.-%
- CaF₂: 58-68 Gew.-%
- Mo: 0,5-2 Gew.-%
- Nb: 1,5-2,3 Gew.-%
- Cr: 3-5 Gew.-%
- Mn: 1,2-3 Gew.-%
- Na₂SiO₃: 2-6 Gew.-%
und gegebenenfalls weitere Bestandteile, insbesondere:
- MgO: < 1 Gew.-%
- CaO.Al₂O₃: < 1 Gew.-%
- Karbonate: < 1 Gew.-%
sowie unvermeidbare Verunreinigungen.

5. Verfahren nach einem der Ansprüche 1 bis 4, wobei das Flussmittelmaterial die folgende Zusammensetzung aufweist:
- Al₂O₃: 23-24 Gew.-%
- CaF₂: 60-65 Gew.-%
- Mo: 0,8-1,5 Gew.-%
- Nb: 1,8-2,2 Gew.-%
- Cr: 3,4-4,5 Gew.-%
- Mn: 1,2-2,5 Gew.-%
- Na₂SiO₃: 4-6 Gew.-%
und gegebenenfalls weitere Bestandteile, insbesondere:
- MgO: < 1 Gew.-%
- CaO.Al₂O₃: < 1 Gew.-%
- Karbonate: < 1 Gew.-%
sowie unvermeidbare Verunreinigungen.

6. Verfahren nach einem der Ansprüche 1 bis 5, wobei das Flussmittelmaterial die folgende Zusammensetzung aufweist:
- Al₂O₃: 24 Gew.-%
- CaF₂: 62 Gew.-%
- Mo: 1 Gew.-%
- Nb: 2 Gew.-%
- Cr: 4 Gew.-%
- Mn: 2 Gew.-%
- Na₂SiO₃: 5 Gew.-%
und gegebenenfalls weitere Bestandteile, insbesondere:
- MgO: < 1 Gew.-%
- CaO.Al₂O₃: < 1 Gew.-%
- Karbonate: < 1 Gew.-%
sowie unvermeidbare Verunreinigungen.

7. Verfahren nach einem der Ansprüche 1-6, wobei die Schweißbandelektrode die folgende Zusammensetzung aufweist:
| | |
|---|---|
| C | 0,012-0,015 Gew.-% |
| Mn | 1,65-1,75 Gew.-% |
| Si | 0,38-0,42 Gew.-% |
| Cr | 20-25 Gew.-% |
| Ni | 10-15 Gew.-% |
| Mo | 0,01-0,15 Gew.-% |
und gegebenenfalls weitere Bestandteile, insbesondere:
| | |
|---|---|
| S | 0,0005-0,003 Gew.-% |
| P | 0,012-0,020 Gew.-% |
| Nb | 0,01 Gew.-% |
| Cu | 0,02-0,04 Gew.-% |
| N | 0,045-0,60 |
sowie unvermeidbare Verunreinigungen, wobei der Rest Eisen ist.

8. Verfahren nach einem der Ansprüche 1-7, wobei das Elektroschlacke-Bandplattieren das Anlegen eines Schweißstroms von 400-1800 A, vorzugsweise 1200-1300 A, und einer Schweißspannung von 22-26 V, insbesondere 23-25 V, umfasst.

9. Verfahren nach einem der Ansprüche 1-8, wobei eine Schweißgeschwindigkeit von 16-24 cm/min, vorzugsweise 18-22 cm/min, verwendet wird.

10. Flussmittelmaterial zur Verwendung in einem Verfahren zum Aufbringen eines Überzugsmaterials auf eine Metalloberfläche mittels Elektroschlacke-Bandplattieren, wobei das Flussmittelmaterial die folgende Zusammensetzung aufweist:
- Al₂O₃: 20-30 Gew.-%
- CaF₂: 55-70 Gew.-%
- Mo: 0,3-3 Gew.-%
- Nb: 1,2-2,5 Gew.-%
- Cr: 3-6 Gew.-%
- Mn: 1-3,5 Gew.-%
- Na₂SiO₃: 1-6 Gew.-%
und gegebenenfalls weitere Bestandteile, insbesondere:
- MgO: < 1 Gew.-%
- CaO.Al₂O₃: < 1 Gew.-%
- Karbonate: < 1 Gew.-%
sowie unvermeidbare Verunreinigungen.

11. Flussmittelmaterial nach Anspruch 10, wobei das Flussmittelmaterial die folgende Zusammensetzung aufweist
- Al₂O₃: 23-24 Gew.-%
- CaF₂: 60-65 Gew.-%
- Mo: 0,8-1,5 Gew.-%
- Nb: 1,8-2,2 Gew.-%
- Cr: 3,4-4,5 Gew.-%
- Mn: 1,2-2,5 Gew.-%
- Na₂SiO₃: 4-6 Gew.-%
und gegebenenfalls weitere Bestandteile, insbesondere:
- MgO: < 1 Gew.-%
- CaO.Al₂O₃: < 1 Gew.-%
- Karbonate: < 1 Gew.-%
sowie unvermeidbare Verunreinigungen.

12. Flussmittelmaterial nach Anspruch 10 oder 11, wobei das Flussmittelmaterial die folgende Zusammensetzung aufweist:
- Al₂O₃: 24 Gew.-%
- CaF₂: 62 Gew.-%
- Mo: 1 Gew.-%
- Nb: 2 Gew.-%
- Cr: 4 Gew.-%
- Mn: 2 Gew.-%
- Na₂SiO₃: 5 Gew.-%
und gegebenenfalls weitere Bestandteile, insbesondere:
- MgO: < 1 Gew.-%
- CaO.Al₂O₃: < 1 Gew.-%
- Karbonate: < 1 Gew.-%
sowie unvermeidbare Verunreinigungen.

13. Kit zur Verwendung in einem Verfahren zum Aufbringen eines Überzugsmaterials auf eine Metalloberfläche mittels Elektroschlacke-Bandplattieren, umfassend ein Flussmittelmaterial nach einem der Ansprüche 10-12 und eine Schweißbandelektrode, wobei die Schweißbandelektrode aus einem austenitischen rostfreien Stahl, wie einer 308L- oder einer 309L-Legierung, hergestellt ist.

14. Kit nach Anspruch 13, wobei die Schweißbandelektrode die folgende Zusammensetzung aufweist:
| | |
|---|---|
| C | 0,012-0,015 Gew.-% |
| Mn | 1,65-1,75 Gew.-% |
| Si | 0,38-0,42 Gew.-% |
| Cr | 20-25 Gew.-% |
| Ni | 10-15 Gew.-% |
| Mo | 0,01-0,15 Gew.-% |
und gegebenenfalls weitere Bestandteile, insbesondere:
| | |
|---|---|
| S | 0,0005-0,003 Gew.-% |
| P | 0,012-0,020 Gew.-% |
| Nb | 0,01 Gew.-% |
| Cu | 0,02-0,04 Gew.-% |
| N | 0,045-0,60 Gew.-% |
sowie unvermeidbare Verunreinigungen, wobei der Rest Eisen ist.

## Revendications

1. Procédé de dépôt d'un matériau de recouvrement sur une surface métallique au moyen d'un placage de bande parfusion sous laitier, dans lequel ledit placage de bande par fusion sous laitier comprend l'utilisation d'une électrode de soudage en bande constituée d'un acier inoxydable austénitique et d'un matériau de flux ayant la composition suivante :
- Al₂O₃: 20 à 30 % en poids
- CaF₂: 55 à 70 % en poids
- Mo : 0,3 à 3 % en poids
- Nb : 1,2 à 2,5 % en poids
- Cr : 3 à 6 % en poids
- Mn : 1 à 3,5 % en poids
- Na₂SiO₃: 1 à 6 % en poids
et éventuellement d'autres constituants, en particulier :
- MgO : < 1 % en poids
- CaO.Al₂O₃ : < 1 % en poids
- Carbonates : < 1 % en poids
ainsi que des impuretés inévitables, dans lequel le placage de bande par fusion sous laitier comprend les étapes consistant à :
- fournir l'électrode de soudage en bande,
- fournir le matériau de flux,
- positionner l'électrode de soudage en bande à une certaine distance au-dessus d'une zone de soudage de la surface métallique,
- appliquer une couche de matériau de flux sur la surface métallique dans la zone de soudage,
- appliquer un courant de soudage à l'électrode de soudage en bande, ce qui fait fondre le matériau de flux, l'électrode de bande et la surface métallique,
- introduire en continu l'électrode de soudage en bande dans la couche de matériau de flux fondu tout en faisant avancer l'électrode de soudage en bande sur la surface métallique pour produire un dépôt de matériau de recouvrement sur la surface métallique le long du chemin d'avancement.

2. Procédé selon la revendication 1, dans lequel deux couches de matériau de recouvrement sont déposées sur la surface métallique.

3. Procédé selon la revendication 2, dans lequel la seconde couche du dépôt de matériau de recouvrement a une teneur en ferrite de < 17 FN, de préférence < 15 FN, (mesurée sur sa surface supérieure), dans lequel l'indice de ferrite (FN) est mesuré à l'aide du Fischer Ferrite-scope FMP 30 conformément à la norme AWS A4.2.

4. Procédé selon l'une quelconque des revendications 1 à 3, dans lequel le matériau de flux a la composition suivante :
- Al₂O₃: 22 à 25 % en poids
- CaF₂: 58 à 68 % en poids
- Mo : 0,5 à 2 % en poids
- Nb : 1,5 à 2,3 % en poids
- Cr : 3 à 5 % en poids
- Mn : 1,2 à 3 % en poids
- Na₂SiO₃ : 2 à 6 % en poids
et éventuellement d'autres constituants, en particulier :
- MgO : < 1 % en poids
- CaO. Al₂O₃: < 1 % en poids
- Carbonates : < 1 % en poids
ainsi que des impuretés inévitables.

5. Procédé selon l'une quelconque des revendications 1 à 4, dans lequel le matériau de flux a la composition suivante :
- Al₂O₃ : 23 à 24 % en poids
- CaF₂: 60 à 65 % en poids
- Mo : 0,8 à 1,5 % en poids
- Nb : 1,8 à 2,2 % en poids
- Cr : 3,4 à 4,5 % en poids
- Mn : 1,2 à 2,5 % en poids
- Na₂SiO₃: 4 à 6 % en poids
et éventuellement d'autres constituants, en particulier :
- MgO : < 1 % en poids
- CaO.Al₂O₃: < 1 % en poids
- Carbonates : < 1 % en poids
ainsi que des impuretés inévitables.

6. Procédé selon l'une quelconque des revendications 1 à 5, dans lequel le matériau de flux a la composition suivante :
- Al₂O₃: 24 % en poids
- CaF₂: 62 % en poids
- Mo : 1 % en poids
- Nb : 2 % en poids
- Cr : 4 % en poids
- Mn : 2 % en poids
- Na₂SiO₃: 5 % en poids
et éventuellement d'autres constituants, en particulier :
- MgO : < 1 % en poids
- CaO.Al₂O₃: < 1 % en poids
- Carbonates : < 1 % en poids
ainsi que des impuretés inévitables.

7. Procédé selon l'une quelconque des revendications 1 à 6, dans lequel l'électrode de soudage en bande a la composition suivante :
| | |
|---|---|
| C | 0,012 à 0,015 % en poids |
| Mn | 1,65 à 1,75 % en poids |
| Si | 0,38 à 0,42 % en poids |
| Cr | 20 à 25 % en poids |
| Ni | 10 à 15 % en poids |
| Mo | 0,01 à 0,15 % en poids |
et éventuellement d'autres constituants, en particulier :
| | |
|---|---|
| S | 0,0005 à 0,003 % en poids |
| P | 0,012 à 0,020 % en poids |
| Nb | 0,01 % en poids |
| Cu | 0,02 à 0,04 % en poids |
| N | 0.045 à 0.60 |
ainsi que des impuretés inévitables, le reste étant constitué de fer.

8. Procédé selon l'une quelconque des revendications 1 à 7, dans lequel ledit placage de bande par fusion sous laitier électrique comprend l'application d'un courant de soudage de 400 à 1800 A, de préférence 1200 à 1300 A, et d'une tension de soudage de 22 à 26 V, en particulier 23 à 25 V.

9. Procédé selon l'une quelconque des revendications 1 à 8, dans lequel on utilise une vitesse de soudage de 16 à 24 cm/min, de préférence 18 à 22 cm/min.

10. Matériau de flux à utiliser dans un procédé de dépôt d'un matériau de recouvrement sur une surface métallique au moyen d'un placage de bande par fusion sous laitier, ledit matériau de flux ayant la composition suivante :
- Al₂O₃: 20 à 30 % en poids
- CaF₂: 55 à 70 % en poids
- Mo : 0,3 à 3 % en poids
- Nb : 1,2 à 2,5 % en poids
- Cr : 3 à 6 % en poids
- Mn : 1 à 3,5 % en poids
- Na₂SiO₃: 1 à 6 % en poids
et éventuellement d'autres constituants, en particulier :
- MgO : < 1 % en poids
- CaO.Al₂O₃: < 1 % en poids
- Carbonates : < 1 % en poids
ainsi que des impuretés inévitables.

11. Matériau de flux selon la revendication 10, dans lequel le matériau de flux a la composition suivante :
- Al₂O₃: 23 à 24 % en poids
- CaF₂: 60 à 65 % en poids
- Mo : 0,8 à 1,5 % en poids
- Nb : 1,8 à 2,2 % en poids
- Cr : 3,4 à 4,5 % en poids
- Mn : 1,2 à 2,5 % en poids
- Na₂SiO₃: 4 à 6 % en poids
et éventuellement d'autres constituants, en particulier :
- MgO : < 1 % en poids
- CaO.Al₂O₃: < 1 % en poids
- Carbonates : < 1 % en poids
ainsi que des impuretés inévitables.

12. Matériau de flux selon les revendications 10 ou 11, dans lequel le matériau de flux a la composition suivante :
- Al₂O₃: 24 % en poids
- CaF₂: 62 % en poids
- Mo : 1 % en poids
- Nb : 2 % en poids
- Cr : 4 % en poids
- Mn : 2 % en poids
- Na₂SiO₃: 5 % en poids
et éventuellement d'autres constituants, en particulier :
- MgO : < 1 % en poids
- CaO.Al₂O₃: < 1 % en poids
- Carbonates : < 1 % en poids
ainsi que des impuretés inévitables.

13. Ensemble destiné à être utilisé dans un procédé de dépôt d'un matériau de recouvrement sur une surface métallique au moyen d'un placage de bande par fusion sous laitier, comprenant un matériau de flux selon l'une quelconque des revendications 10 à 12 et une électrode de soudage en bande, dans lequel l'électrode de soudage en bande est constituée d'un acier inoxydable austénitique, tel qu'un alliage 308L ou un alliage 309L.

14. Ensemble selon la revendication 13, dans lequel l'électrode en bande a la composition suivante :
| | |
|---|---|
| C | 0,012 à 0,015 % en poids |
| Mn | 1,65 à 1,75 % en poids |
| Si | 0,38 à 0,42 % en poids |
| Cr | 20 à 25 % en poids |
| Ni | 10 à 15 % en poids |
| Mo | 0,01 à 0,15 % en poids |
et éventuellement d'autres constituants, en particulier :
| | |
|---|---|
| S | 0,0005 à 0,003 % en poids |
| P | 0,012 à 0,020 % en poids |
| Nb | 0,01 % en poids |
| Cu | 0,02 à 0,04 % en poids |
| N | 0,045 à 0,60 % en poids |
ainsi que des impuretés inévitables, le reste étant constitué de fer.
